# EUROPÄISCHE PATENTSCHRIFT

(11) **EP 1 502 810 B1**
(45) Veröffentlichungstag und Bekanntmachung des Hinweises auf die Patenterteilung: **18.02.2009**
(21) Anmeldenummer: 04017715.6
(22) Anmeldetag: 27.07.2004
(51) Int. Cl.: B60N 3/00, B60N 3/10, B60N 2/48, B60R 11/00, B60N 2/68

(54) **Sitzanordnung für Fahrzeuge**
Vehicle seat arrangement
Agencement de sièges de véhicules

(30) Priorität: 28.07.2003 DE 10334595
(43) Veröffentlichungstag der Anmeldung: 02.02.2005
(73) Patentinhaber: GRAMMER AG, 92224 Amberg (DE)
(72) Erfinder: Mayer, Hannes, Dipl.-des., 42105 Wuppertal (DE); Thiele, Ingo, Dipl.-des., 42285 Wuppertal (DE)
(74) Vertreter: Ostriga, Sonnet, Wirths & Roche

(56) Entgegenhaltungen:
- DE-A1- 2 718 237
- DE-A1- 10 029 624
- DE-A1- 19 544 267
- US-A- 2 566 757
- US-A- 3 253 859
- US-A- 3 337 268

## Beschreibung

Die Erfindung betrifft eine Sitzanordnung für Fahrzeuge gemäß Anspruch 1.

Bei solchen Sitzanordnungen sind typischerweise die beiden vorderen Fahrzeugsitze einer Pkw-Limousine als Einzelsitz jeweils von einer mit einer Polsterung versehenen Sitzlehnentragstruktur in Form eines Lehnenrahmens gebildet. Der Lehnenrahmen ist dabei nach Art eines auf dem Kopf stehenden U ausgebildet und weist typischerweise zwei im wesentlichen vertikal ausgerichtete, in Fahrzeugquerrichtung voneinander beabstandete Holme auf, die an ihrem oberen, freien Ende durch eine Quertraverse miteinander verbunden sind. Die beiden Holme sind um eine in Fahrzeugquerrichtung verlaufende, am unteren Ende der Holme angeordnete Achse schwenkbar und in mehreren Schwenklagen arretierbar.

Der Lehnenrahmen ist darüber hinaus herkömmlich mit einer Vielzahl von Federelementen versehen, die die zur Erreichung des gewünschten Sitzkomforts erforderliche Elastizität bereitstellen.

Zur Befestigung der Kopfstütze an der Rückenlehne des vorderen Sitzes weist die Kopfstütze üblicherweise zwei Tragstangen auf, die in einer lehnenrahmenseitigen Aufnahmeeinrichtung gehalten sind. Hierzu ist in der oberen Quertraverse des Lehnenrahmens eine Führung vorgesehen, derart, dass die beiden Tragstangen die obere Quertraverse des Lehnenrahmens im wesentlichen vertikal durchstecken.

Typischerweise werden Kopfstützen von anderen Unternehmen gefertigt, als die Rückenlehnen des Fahrzeugsitzes, so dass es hinsichtlich der konstruktiven Anbindung der Kopfstütze an eine Sitzlehne sowie hinsichtlich deren Montage einer Vielzahl von Absprachen zwischen dem Kopfstützenhersteller und dem Sitzhersteller bedarf. Als problematisch stellt sich in diesem Zusammenhang dar, dass der für den Einbau der Aufnahmeeinrichtung für die Kopfstütze an dem Lehnenrahmen vorhandene Einbauraum nur sehr klein ist. Eine optimale Anpassung der Kopfstütze an die Rückenlehne, insbesondere hinsichtlich ihrer Klapperfreiheit in Gebrauch und hinsichtlich einer genauen Maßhaltigkeit für eine ordnungsgemäße Verstellung, ist nur in begrenztem Maße erreichbar.

Die beiden Tragstangen der Kopfstütze sind häufig einander eng benachbart angeordnet. Selbst dann, wenn die beiden Tragstangen an den äußeren Randbereichen der Kopfstütze befestigt werden, befinden sich die Anbindungsstellen der Tragstangen an die Quertraverse relativ nahe im Bereich der Mitte der Quertraverse. Die Quertraverse des Lehnenrahmens ist jedoch oft sehr dünn ausgebildet, so dass es im Crashfalle, bei dem auf die Kopfstütze sehr große Kräfte ausgeübt werden können, zu einer Verwindung der Quertraverse und einer damit einhergehenden Gefahr von Verletzungen kommen kann.

Bei Sitzanordnungen des Standes der Technik spielt schließlich auch die Anbringung einer Funktionseinheit an der Rückseite der Rückenlehne des vorderen Sitzes eine besondere Rolle. So können Bildschirme für Video- oder DVD-Geräte, Computer einschließlich Bildschirm und Tastatur, Tassenhalter (cup holder) etc. vorgesehen werden. Die Anbringung einer derartigen Funktionseinheit an der Rückenlehne des vorderen Sitzes ist dabei mit einem hohen baulichen Aufwand verbunden.

So ist es beispielsweise aus der DE 41 09 497 C1 bekannt, eine Arbeitseinheit aus einem flachen Bildschirm und einer Tastatur mittels Befestigungselementen hinter einer Rückenlehne eines Fahrzeugsitzes bei Bedarf anzuordnen, wobei Einhängearme vorgesehen sind, die die Tragstangen der Kopfstütze umgreifen.

Aus der DE 100 29 624 A1 geht eine Sitzanordnung hervor, bei der ein für unterschiedliche Zwecke nutzbares Staufach entweder in der Rückenlehne oder in der Kopfstütze des vorderen Fahrzeugsitzes angeordnet werden kann. An dem Rückenlehnenteil ist eine verstellbare Kopfstütze angeordnet, wobei vermutet werden kann, dass die Tragstangen der Kopfstütze von einer Aufnahmeeinrichtung gehaltert werden, die an einer Quertraverse des Lehnenrahmens der Rückenlehne angeordnet ist, wie dies typischerweise der Fall ist.

Aus der US 3 337 268 A geht eine Sitzanordnung hervor, bei der eine Kopfstütze mittels einer Teleskoparmanordnung an der Rückseite der Lehne angebracht ist. Die Teleskopanordnung kann als Nachbausatz auf die Rückseite der Lehne aufgeschraubt werden. Mittels frei zugänglichen Drehverstellknöpfen kann die Kopfstütze in einer gewünschten Höhenposition festgelegt werden. Die Druckschrift beschreibt kein als Querträger ausgebildetes Kraftleitungsbauteil.

Ausgehend von diesem Stand der Technik liegt die Aufgabe der Erfindung darin, die Sitzanordnung derart weiterzubilden, dass bei einfacher Bauweise eine verbesserte Anbringung der Kopfstütze an dem Lehnenrahmen und der Funktionseinheit an der Rückenlehne möglich wird.

Die Erfindung löst diese Aufgabe mit den Merkmalen des Anspruches 1.

Das Prinzip der Erfindung besteht somit im wesentlichen darin, die Kopfstütze und ein Einbaufeld für die Funktionseinheit zu einer gemeinsamen Baueinheit zusammenzufassen, die insgesamt an dem Lehnenrahmen befestigt wird. Die als Tragelement ausgebildete Baueinheit umfasst darüber hinaus ein Kraftleitungsbauteil, welches die im Crashfall auf die Kopfstütze ausgeübten Kräfte unmittelbar in die Rahmenstruktur des Lehnenrahmens einleitet. Hierzu kann das Kraftleitungsbauteil in hohem Maße verwindungssteif ausgebildet sein, und daher beispielsweise einen gegenüber dem Querschnitt herkömmlicher Quertraversen von Lehnenrahmen deutlich vergrößerten Querschnitt beziehungsweise eine stabilere Bauweise besitzen.

Vorteilhaft überbrückt das Tragelement den Abstand zwischen den beiden Holmen im Wesentlichen.

Insgesamt können in konstruktiver Hinsicht das Tragelement, die Kopfstütze und die Funktionseinheit z.B. bezüglich Kraftweiterleitung aufeinander optimal angepasst werden, da die gesamte Baueinheit an dem Lehnenrahmen befestigt wird. Es entfällt somit eine aufwendige Montage der Einzelteile vor Ort, wobei die Möglichkeit besteht, die Aufnahmeeinrichtung nahezu beliebig zu dimensionieren. Der beim Stand der Technik nur äußerst kleine Einbauraum für die Aufnahmeeinrichtung, der durch die Dimensionen der Quertraverse begrenzt war, ist nunmehr deutlich vergrößert.

Da insbesondere für die Relativverstellung der Kopfstütze zu dem feststehenden Lehnenrahmen eine besondere Führung für eine Verlagerbarkeit der Tragstangen, beispielsweise durch entsprechende Führungshülsen, erforderlich ist, können die für die Höhenverstellung vorgesehenen Bauteile mit den erforderlichen geringen Toleranzen und höheren Maßhaltigkeiten gefertigt und entsprechend zusammengesetzt werden, wobei ein optimiertes Zusammenspiel der einzelnen Bauteile zueinander möglich wird.

Außerdem besteht die Möglichkeit, die für eine Höhenverstellung erforderlichen Bauelemente, beispielsweise eine Vorrichtung zur elektrischen Höhenverstellung der Kopfstütze, auf einfachere Weise an dem Tragelement zu montieren, als dies bei Lehnenrahmen des Standes der Technik der Fall war. Dort mussten die für eine Höhenverstellung der Kopfstütze erforderlichen Bauteile in einen nur sehr eng begrenzten Einbauraum eingesetzt werden, der durch die beiden Holme des Lehnenrahmens seitlich begrenzt war, was zu einer umständlichen Montage führte.

Da erfindungsgemäß die Aufnahmeeinrichtung für die Kopfstütze an dem gesonderten Tragelement befestigt ist, kann eine vorteilhafte Baugruppen-Vormontage unter besserer Zugänglichkeit eines Befestigungssockels für die Aufnahmeeinrichtung erfolgen.

Die erfindungsgemäße Lösung bietet darüber hinaus die Möglichkeit einer besseren Krafteinleitung der im Crashfalle auf die Kopfstütze ausgeübten Kräfte in die Rahmenstruktur des Lehnenrahmens, da das Tragelement unmittelbar an den beiden Holmen des Lehnenrahmens oder zumindest in unmittelbarer Nähe der Holme befestigt werden kann, so dass eine unmittelbare Kraftweiterleitung möglich wird. So können bei entsprechender Ausgestaltung des Tragelementes beziehungsweise eines an dem Tragelement angeordneten Kraftleitungsbauteils auch große Kräfte weitergeleitet werden.

Schließlich ermöglicht die erfindungsgemäße Sitzanordnung auch einen einfachen Austausch der Funktionseinheit, der Kopfstütze und des Tragelementes, so dass von einer Modulbauweise gesprochen werden kann. Eine solche Modulbauweise erleichtert auch eine Austauschbarkeit eines montierten Tragelementes, beispielsweise für den Fall, dass ein Benutzer eine andere Funktionseinheit wünscht oder wenn im Schadensfalle wesentliche Bauelemente ausgetauscht werden müssen. Das Tragelement kann hierzu mit besonders einfach ausgestalteten Befestigungsmitteln versehen sein, sowie außerdem Anschlusselemente für Versorgungsleitungen aufweisen, die mit lehnenseitigen Gegenanschlusselementen verbunden werden können.

Aus der DE 94 07 193 U1 geht eine Sitzanordnung hervor, bei der an der Rückseite der Rücklehne eine Halterungseinrichtung für einen Fernsehapparat angeordnet ist. Ein von dem Lehnenrahmen gesondertes Tragelement, an dem auch eine Aufnahmeeinrichtung für wenigstens eine Tragstange der Kopfstütze angeordnet ist, geht aus dieser Druckschrift nicht hervor.

Aus der DE 34 44 802 C2 geht eine Sitzanordnung hervor, bei der an der Rückseite der Rücklehne eines Doppelsitzes ein Bildschirm und eine ausklappbare Tischplatte angeordnet ist. Der Bildschirm ist z.B. in der Kopfstütze angeordnet und die Tischplatte in der Rückenlehne, wobei die Kopfstütze mit der Rückenlehne ein einstückiges Bauelement ausbildet.

Aus der nicht gattungsgemäßen DE 43 25 996 C2 geht eine nicht gattungsgemäße Sitzanordnung hervor, bei der die Kopfstütze mittels zweier Tragstangen in Führungshülsen der oberen Quertraverse eines im wesentlichen U-förmigen Lehnenrahmens angeordnet ist. Eine Vorrichtung zur Höhenverstellung ist über Befestigungshaken mit dem Rahmen des Lehnenkörpers verbunden.

Aus der DE-PS 19 45 571 geht eine nicht gattungsgemäße Sitzanordnung hervor, bei der zur Befestigung der Kopfstütze an der Rückenlehne eines Fahrzeugsitzes eine spangenartige Steganordnung vorgesehen ist, die die Rückenlehne von ihrem Lehnenkopf her übergreift.

Aus der DE-AS 20 34 832 geht eine nicht gattungsgemäße Sitzanordnung hervor, bei der zur Befestigung der Kopfstütze am Lehnenrahmen ein im Wesentlichen U-förmiges Tragjoch vorgesehen ist, welches seitlich mittels Befestigungsschrauben an den Holmen des Lehnenrahmens befestigt wird.

Aus der DE-OS 16 80 264 geht eine ebenfalls nicht gattungsgemäße Sitzanordnung hervor, bei der die Kopfstütze mittels einer Steganordnung nachträglich über eine vorhandene Rücklehne montiert wird.

Aus der DE 198 08 404 A1 geht eine nicht gattungsgemäße Sitzanordnung hervor, bei der in einer Fondsitzlehne eine Durchtadeöffnung von einem modularen Einbauteil umgriffen wird, an dem eine Kopfstütze befestigt ist.

Aus der US 3 253 859 A geht eine Kopfstütze hervor, die über ein streifenförmiges Element unmittelbar mit Quertraversen eines Lehnenrahmens verbunden ist. Die Druckschrift zeigt keine Funktionseinheit, die an der Rückseite der Lehne angebracht ist.

Aus der US 2 566 757 A geht eine Kopfstütze hervor, die spangenartig lösbar an einem Lehnenkopf befestigbar ist. Hier ist auf der Rückseite der Lehne in montiertem Zustand der Kopfstütze eine Tasche mit einem Staufach angeordnet. Diese Druckschrift zeigt kein Tragelement, welches gesondert von der Sitzlehnentragstruktur vorgesehen und an der Sitzlehnentragstruktur befestigt ist.

Gemäß einer vorteilhaften Ausgestaltung der Erfindung erstreckt sich das Tragelement im Wesentlichen über die gesamte Breite und/oder im Wesentlichen über die gesamte Höhe der Rückseite der Rückenlehne. Bei dieser Ausgestaltung der Erfindung besteht ein wesentlicher Vorteil darin, dass das Tragelement im Wesentlichen die Rückwand der Rückenlehne ausbilden kann. So kann beispielsweise vorgesehen sein, dass das Tragelement an einer bereits umpolsterten Sitzlehnentragstruktur von deren Rückseite her befestigt wird, wobei dieser Befestigungsschritt der letzte Montageschritt der Rückenlehne ist.

Die Formulierung, wonach sich das Tragelement im Wesentlichen über die gesamte Breite oder im wesentlichen über die gesamte Höhe der Rückseite der Rückenlehne erstreckt, soll dabei jedoch auch solche Ausführungsformen mit einschließen, bei denen nur ein wesentlicher Teil der Rückseite der Rückenlehne von dem Tragelement überspannt wird.

Die Erfindung lässt dabei auch die Möglichkeit offen, dass das Tragelement auf seiner zu dem hinteren Fahrzeugsitz hingewandten Seite kaschiert ist, beispielsweise mit einem Bezugsstoff oder mit Leder überzogen ist oder gegebenenfalls auch eine Polsterung aufweist.

Gleichermaßen umfasst die Erfindung auch solche Tragelemente, die zumindest einen Bereich des Lehnenkopfes bilden.

Möglich wird mit der erfindungsgemäßen Lösung auch eine Ausbildung des Tragelementes derart, dass dieses nach Art einer Abschlussschale die Rückseite der Rückenlehne ausbildet. Die dem hinteren Fahrzeugsitz zugewandte Rückwand der Rückenlehne wird dabei im wesentlichen von dem Tragelement gebildet.

Gemäß einer weiteren vorteilhaften Ausgestaltung der Erfindung ist die Kopfstütze mittels der wenigstens einen Tragstange lösbar in der Aufnahmeeinrichtung gehaltert. Vorzugsweise ist die Kopfstütze mittels zweier, in Fahrzeugquerrichtung voneinander beabstandeter Tragstangen in der Aufnahmeeinrichtung gehalten. Die einfache Lösbarkeit der Kopfstütze, insbesondere derart, dass die Tragstangen aus der Aufnahmeeinrichtung vollständig entnehmbar sind, ist von besonderer Bedeutung, um beispielsweise an der Kopfstütze einen Schonbezug anbringen zu können oder um bei Bedarf die Kopfstütze aus sonstigen Gründen auf einfache Weise lösen zu können.

Gemäß einer weiteren vorteilhaften Ausgestaltung der Erfindung ist an dem Tragelement ein mit der Kopfstütze zusammenwirkendes Steuerelement angeordnet. Ein derartiges Steuerelement kann beispielsweise eine Vorrichtung zur elektrischen Höhenverstellung, eine Vorrichtung zur crashaktiven Kopfstützensteuerung oder zur Auslösung von Kopfstützen-Airbags etc. sein. Das Tragelement bietet daher die Möglichkeit, derartige Steuerelemente unmittelbar an der aus Tragelement, Aufnahmeeinrichtung und Einbaufeld bestehenden Baueinheit anzuordnen, so dass eine weiter verbesserte Montage, beispielsweise aufgrund verbesserter Zugänglichkeit, möglich wird.

Gemäß einer weiteren vorteilhaften Ausgestaltung der Erfindung ist das Tragelement zur Befestigung an der Sitzlehnentragstruktur von der Rückseite der Sitzlehnentragstruktur her an diese ansetzbar, insbesondere an dieser befestigbar. Diese Ausgestaltung der Erfindung ermöglicht eine besonders einfache Montage des Tragelementes an der Sitzlehnentragstruktur derart, dass dieser Befestigungsschritt den letzten Montageschritt zur Fertigstellung der Sitzanordnung darstellt.

Möglich wird dabei außerdem eine vereinfachte beziehungsweise verbesserte Umpolsterung der Sitzlehnentragstruktur derart, dass das Tragelement eine vollständige Umpolsterung der Sitzlehnentragstruktur entbehrlich macht und gewisse Polsterungsbereiche nach Art einer Blende überdecken kann.

Gemäß einer weiteren vorteilhaften Ausgestaltung der Erfindung ist das Tragelement an dem Lehnenrahmen mittels Befestigungselementen befestigbar, die mit lehnenrahmenseitigen, in unmittelbarer Nähe der Holme oder an den Holmen angeordneten Gegenbefestigungselementen zusammenwirken. Durch Anordnung von Befestigungselementen und Gegenbefestigungselementen kann eine besonders einfache Verriegelung des Tragelementes an dem Lehnenrahmen erfolgen. Beispielsweise können auch Steckverbindungen, Rastverbindungen oder vergleichbare, das Tragelement mit dem Lehnenrahmen verriegelnde Verbindungen vorgesehen werden, die eine sichere Befestigung des Tragelementes an der Sitzlehnentragstruktur ermöglichen. Außerdem ermöglichen derartige Befestigungselemente eine besonders einfache Montage des Tragelementes an der Sitzlehnentragstruktur.

Gemäß einer weiteren vorteilhaften Ausgestaltung der Erfindung ist das Tragelement im wesentlichen plattenförmig ausgebildet. Eine derartige Ausgestaltung begünstigt die Ausbildung einer Rückwand der Sitzlehne durch das Tragelement.

Gemäß einer weiteren vorteilhaften Ausgestaltung der Erfindung weist das Tragelement Anschlusselemente für Versorgungsleitungen, z.B. Spannungsversorgungsleitungen, Signal- oder Datenleitungen, Pneumatik- oder Unterdruckleitungen auf, die mit lehnenseitigen Gegenanschlusselementen in Verbindung, z.B. in Steckverbindung gebracht werden können. Auf diese Weise können vordefinierte Anschlussstellen bereitgestellt werden, die die Funktionseinheit oder beispielsweise ein mit der Kopfstütze zusammenwirkendes Steuerelement mit der notwendigen Betriebsspannung oder mit einer erforderlichen Signalleitung oder einer Unterdruckleitung verbinden können.

Weitere Vorteile der Erfindung ergeben sich aus den nicht zitierten Unteransprüchen sowie anhand der in den Zeichnungen dargestellten und nachfolgend beschriebenen Ausführungsbeispiele. Darin zeigen:
- Fig. 1: schematisch in Ansicht ein Personenkraftfahrzeug mit einer erfindungsgemäßen Sitzanordnung,
- Fig. 2: die aus zwei vorderen Einzelsitzen bestehende Sitzanordnung der Fig. 1 in Einzeldarstellung,
- Fig. 3: in schematischer, teilgeschnittener Ansicht etwa gemäß Ansichtspfeil III in Fig. 2 den in Fig. 2 rechten der beiden Fahrgastsitze in Rückansicht,
- Fig. 4: in einer schematischen Explosionsseitenansicht das Ausführungsbeispiel der Fig. 3 gemäß Ansichtspfeil IV, und
- Fig. 5: in einer schematischen Darstellung etwa gemäß Fig. 1 ein Kraftfahrzeug mit einem zweiten Ausführungsbeispiel der erfindungsgemäßen Sitzanordnung.

In den Figuren ist die erfindungsgemäße Sitzanordnung in ihrer Gesamtheit mit 10 bezeichnet.

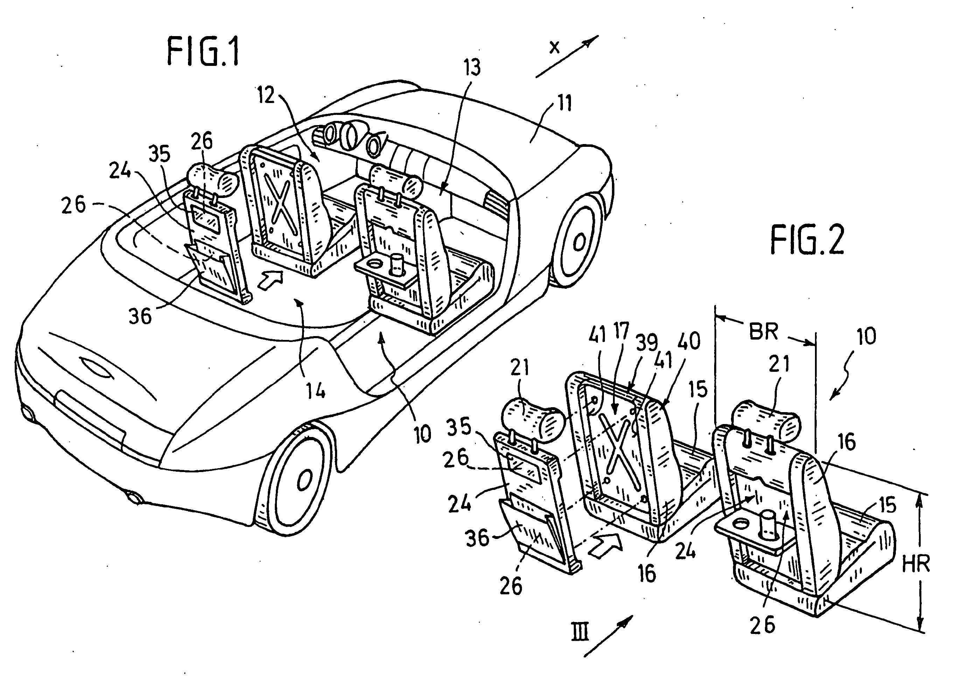

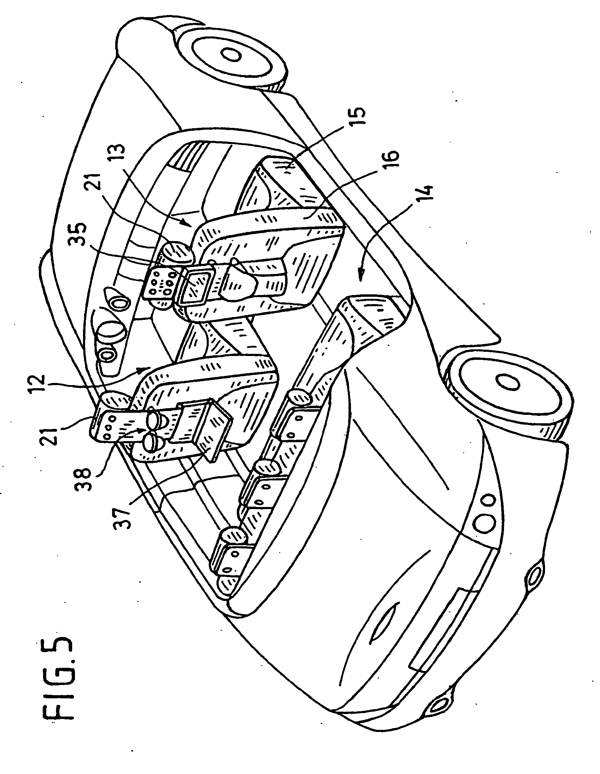

Fig. 1 zeigt ein Kraftfahrzeug 11 mit einer erfindungsgemäßen, aus zwei Einzelsitzen 12, 13 bestehenden Sitzanordnung 10, wobei der besseren Übersichtlichkeit halber die Fond-Sitzbank weggelassen worden ist. Der Betrachter der Fig. 1 hat sich jedoch eine Fond-Sitzbank 14 hinter den beiden Einzelsitzen 12, 13 vorzustellen, wie dies beispielsweise das Ausführungsbeispiel der Fig. 5 zeigt.

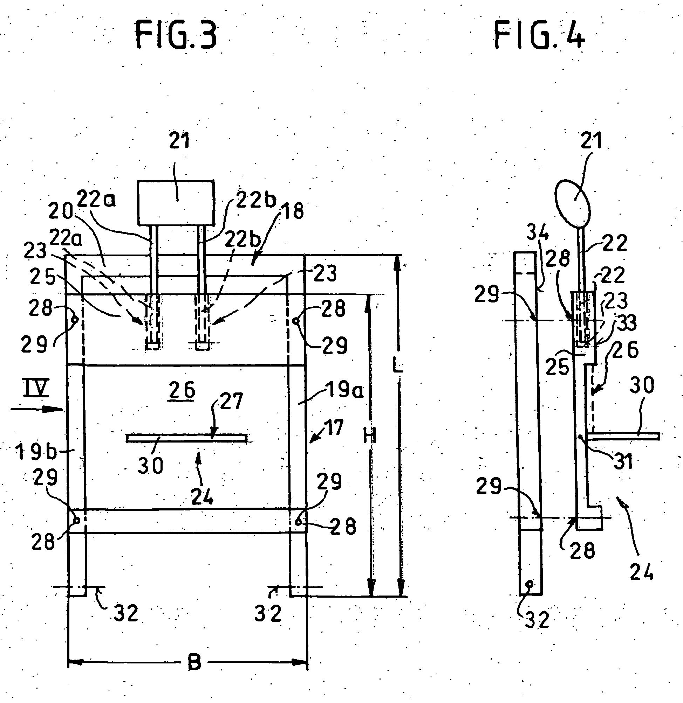

Jeder Einzelsitz 12, 13 weist ein Sitzflächenteil 15 und eine Rückenlehne 16 auf. Die Rückenlehne 16 wird dabei von einer Sitzlehnentragstruktur 17 gebildet, die typischerweise als Lehnenrahmen 18 ausgebildet ist, der im wesentlichen die Form eines auf dem Kopf stehenden U aufweist. Der Lehnenrahmen 18 ist insbesondere aus Fig. 3 ersichtlich und weist zwei im wesentlichen vertikal ausgerichtete, seitliche Holme 19a, 19b und eine Quertraverse 20 auf, die die beiden oberen Enden der Holme miteinander verbindet. Die Holme 19a, 19b sind um eine im unteren Anbindungsbereich der Holmenden befindliche Schwenkachse 32, die sich im wesentlichen quer zur Fahrtrichtung X erstreckt, schwenkbar und ermöglichen eine Verschwenkung der Rückenlehne 16, die in verschiedenen Schwenklagen arretierbar ist. Nicht dargestellt in den Figuren 3 und 4 sind Federelemente, die eine gewisse Elastizität der Rückenlehne bereitstellen sowie Polsterungen, die in den Figuren 1 und 2 jedoch angedeutet sind.

Zur Befestigung einer Kopfstütze 21, die typischerweise zwei Tragstangen 22a und 22b aufweist, an der Rückenlehne 16 wird beim Stand der Technik die Quertraverse 20 in ihrem Mittenbereich mit entsprechenden Aufnahmen und Führungen versehen.

Erfindungsgemäß ist ein Tragelement 24 vorgesehen, welches von dem Lehnenrahmen 18 gesondert ausgebildet ist und welches, wie dies am besten die Figuren 3 und 4 deutlich machen, eine Aufnahmeeinrichtung 23 für die Tragstangen 22a, 22b der Kopfstütze 21 und ein Einbaufeld 26 für eine Funktionseinheit 27 aufweist. Die Aufnahmeeinrichtung 23 kann beispielsweise an einem Kraftleitungsbauteil 25 angeordnet sein, welches z.B. als Querträger ausgebildet ist. Das Einbaufeld 26 ist an der dem hinteren Sitz, also der Fond-Sitzlehne 14, zugewandten Rückseite 33 der Rückenlehne 16 angeordnet.

Das Tragelement 24 ist beim Ausführungsbeispiel gemäß allen Figuren im wesentlichen plattenförmig ausgebildet und weist eine Breite B auf, die im wesentlichen der Breite BR der Rückenlehne 16 entspricht. Das Tragelement 24 weist darüber hinaus eine Höhe H auf, die im wesentlichen der Höhe HR der Rückenlehne 16 entspricht. Insbesondere entspricht die Höhe H des Tragelementes 24 im wesentlichen der Länge L der Holme 19a, 19b.

Zur Befestigung des Tragelementes 24 an der Sitzlehnentragstruktur 17 sind Befestigungsmittel 28 vorgesehen, die tragelementseitig angeordnet sind und Gegenbefestigungsmittel 29, die lehnenrahmenseitig angeordnet sind. Die Figuren 2 und 4 lassen erkennen, dass die Befestigungsmittel 28 und Gegenbefestigungsmittel 29 entlang von Befestigungsrichtungen durch zueinander fluchtende Anordnung miteinander verbindbar sind, so dass das Tragelement 24 von der Rückseite 34 des Lehnenrahmens 18 her an die Rückenlehne 16 ansetzbar ist. Auf diese Weise besteht die Möglichkeit, die Rückenlehne 16 bereits weitgehend vorzufertigen, derart, dass der Lehnenrahmen 18 mit einer Umpolsterung versehen ist und als letzter Montageschritt die Befestigung des Tragelementes 24 an dem Lehnenrahmen 18 vorgenommen wird.

Darüber hinaus können nicht dargestellte Anschlusselemente an dem Tragelement 24 vorgesehen sein, die eine Verbindung mit Versorgungsleitungen ermöglichen, wobei die tragelementseitigen Anschlusselemente mit rückenlehnenseitigen, insbesondere lehnenrahmenseitigen Gegenanschlusselementen in Verbindung gebracht werden können. Falls erforderlich sein sollte, dass eine Funktionseinheit, wie beispielsweise ein Bildschirm, mit Strom versorgt werden soll, kann das Einbaufeld für die Funktionseinheit bereits entsprechende Anschlüsse, insbesondere Steckanschlüsse aufweisen, so dass die Funktionseinheit nur noch eingestöpselt werden muss. Die Anschlüsse in dem Einbaufeld 26 des Tragelementes 24 werden mit der erforderlichen Betriebsspannung über ein tragelementseitiges Anschlusselement versorgt, welches mit einem lehnenseitigen Gegenanschlusselement bei der Montage des Tragelementes 24 an dem Lehnenrahmen 18 mit diesem verbunden wird.

Als Funktionseinheiten 27 kommen unterschiedliche Vorrichtungen in Betracht. Die Figuren 3 und 4 wie auch der rechte Einzelsitz 13 in den Figuren 1 und 2 zeigen ein um eine Schwenkachse 31 schwenkbares Tablett 30, welches beispielsweise eine Tassen- oder Becherhalterung aufweist. Der in dem jeweils linken Einzelsitz 12 der Figuren 1 und 2 angedeutete Bildschirm 35 stellt ein weiteres mögliches, eine Funktionseinheit 27 bildendes Bauelement dar. Auch das Ablagefach 36 des jeweils linken Einzelsitzes 12 der Figuren 1 und 2 ist im Sinne der Erfindung eine Funktionseinheit. Das entsprechende Einbaufeld 26 für den Bildschirm 35 beziehungsweise für das Ablagefach 36 ist im Sinne der vorliegenden Patentanmeldung die jeweils unmittelbar hinter dem Funktionsbauteil 27, 35, 36 befindliche Befestigungsfläche des Tragelementes 24. Das Einbaufeld 26 kann aber gleichermaßen auch ein Staufach oder eine Befestigungseinrichtung für eine Funktionseinheit ausbilden.

Ein Ausführungsbeispiel der Fig. 5 zeigt als Ablageflächen 37 beziehungsweise als Becherhalter 38 ausgebildete Funktionseinheiten sowie in dem rechten Einzelsitz 13 dieses Ausführungsbeispiels ebenfalls einen Bildschirm 35. Auch Spiegelelemente, beispielsweise Make-up-Spiegel, Netze, die taschenartige Aufnahmen zum Ablegen von Zeitschriften od. dgl. bilden, sind möglich. Es handelt sich bei den Funktionseinheiten 27 jedenfalls um solche Vorrichtungen, die für einen auf dem hinteren Sitz befindlichen Benutzer eine bestimmte Funktionalität bieten.

Aus den Figuren 3 und 4 wird ersichtlich, dass das als Querträger 25 ausgebildete Kraftleitungsbauteil des Tragelementes 24 deutlich stabiler ausgebildet sein kann, als die Quertraverse 20 des Lehnenrahmens 18. Die von der Kopfstütze 21 im Crashfalle aufgefangenen Kräfte werden über die Tragstangen 22a, 22b und über das Kraftleitungsbauteil 25 unmittelbar in die Holme 19a, 19b eingeleitet, so dass eine Verwindung im Crashfalle vermieden werden kann. Die Befestigungselemente 28 dienen daher zur unmittelbaren Befestigung an Gegenbefestigungselementen 29, die unmittelbar an den Holmen 19a, 19b oder zumindest in unmittelbarer Nähe der Holme angeordnet sind. Auf diese Weise kann eine Krafteinleitung der im Crashfalle auftretenden Kräfte auf kurzem Wege erfolgen.

Das Tragelement 24 kann darüber hinaus als blendenartiges Bauteil fungieren, welches Befestigungsbereiche der Polsterung, beispielsweise Befestigungsbereiche 39 der Polsterung im Bereich des Lehnenkopfes 40 oder Befestigungsbereiche 41 der Polsterung im Bereich der Seitenwangen der Rückenlehne 16 blendenartig überdecken, so dass die Befestigung der Polsterung an dem Lehnenrahmen vereinfacht ist. Das Tragelement 24 kann auf diese Weise als in optischer Hinsicht abschließendes Element unansehnliche Befestigungsbereiche 39, 41 überdecken, wodurch eine vereinfachte Befestigung der Polsterung möglich wird.

Die Zahl der Befestigungselemente und Gegenbefestigungselemente 28, 29 ist bei dem Ausführungsbeispiel in den Figuren auf vier begrenzt. Grundsätzlich ist jedoch auch eine größere Zahl der Befestigungselemente möglich, die punktartig aber gleichermaßen auch leistenartig ausgebildet sein können.

Je nach Ausbildung des Tragelementes 24 kann nicht nur der Lehnenkopf 40 der Rückenlehne 16 deutlich stabiler ausgebildet werden, sondern es kann auch eine Erhöhung der Verwindungssteifigkeit der Rückenlehne 16 insgesamt erreicht werden. Das Kraftleitungsbauteil 25 kann sich auch über die gesamte Höhe H des Tragelementes 24 erstrecken. Für den Fall, dass das Tragelement 24 entsprechend stabil ausgestaltet wird, kann auf die beim Stand der Technik erforderlichen Quertraversen 20 des Lehnenrahmens 18 gegebenenfalls auch verzichtet werden.

Entscheidend ist, dass die aus Aufnahmeeinrichtung 23, Einbaufeld 26 und Tragelement 24 bestehende Baueinheit insgesamt vormontiert werden kann und als Baueinheit an der Sitzlehnentragstruktur 17 befestigbar ist.

Das Tragelement kann beispielsweise aus Kunststoff bestehen, wobei verschiedene Bauelemente des Tragelementes 24 auch aus unterschiedlichen Materialien bestehen können. Vorteilhaft ist auch, dass das Tragelement 24 Bereiche der Rückwand der Rückenlehne 16 ausbilden kann, die eine unmittelbare äußere Abschlussfläche der Rückenlehne 16 bereitstellen. Alternativ ist es jedoch selbstverständlich auch möglich, dass das Tragelement 24 auf seiner Rückseite 33 mit einer Polsterung versehen ist.

## Patentansprüche

1. Sitzanordnung (10) für Fahrzeuge (11), insbesondere für einen Personen-Kraftwagen, mit wenigstens einem vorderen Fahrzeugsitz (12, 13), insbesondere einem Einzelsitz, und wenigstens einem hinteren Fahrzeugsitz (14), wobei der vordere Fahrzeugsitz zur Ausbildung einer Rückenlehne (16) eine Sitzlehnentragstruktur (17, 18) mit zwei im wesentlichen vertikal ausgerichteten Holmen umfasst, wobei an der Sitzlehnentragstruktur zumindest mittelbar eine Kopfstütze (21) befestigt ist, und wobei an der Rückseite (34) der Rückenlehne (16) des vorderen Fahrzeugsitzes, dem hinteren Fahrzeugsitz zugewandt, eine Funktionseinheit (27), wie Bildschirm, Tassenhalter, od. dgl. angeordnet ist, wobei ein von der Sitzlehnentragstruktur gesondertes Tragelement (24) vorgesehen ist, das an der Sitzlehnentragstruktur, insbesondere an der Rückseite (34) der Sitzlehnentragstruktur (18), befestigbar ist, wobei an dem Tragelement eine Aufnahmeeinrichtung (23) für wenigstens eine Tragstange (22a, 22b) der Kopfstütze angeordnet ist, wobei das Tragelement ein als Querträger ausgebildetes Kraftleitungsbauteil aufweist, welches die bei einem Crashfall auftretenden, auf die Kopfstütze ausgeübten Kräfte in die Holme einleitet, und wobei das Tragelement (24) ein Einbaufeld (26) für die Funktionseinheit bereitstellt.

2. Sitzanordnung nach Anspruch 1, **dadurch gekennzeichnet, dass** sich das Tragelement (24) im wesentlichen über die gesamte Breite (BR) und/oder im wesentlichen über die gesamte Höhe (HR) der Rückseite (33) der Rückenlehne (16) erstreckt.

3. Sitzanordnung nach Anspruch 1 oder 2, **dadurch gekennzeichnet, dass** die Kopfstütze mittels der wenigstens einen Tragstange 22a, 22b lösbar in der Aufnahmeeinrichtung (23) gehaltert ist.

4. Sitzanordnung nach einem der vorangegangenen Ansprüche, **dadurch gekennzeichnet, dass** an dem Tragelement (24) ein mit der Kopfstütze zusammenwirkendes Steuerelement angeordnet ist.

5. Sitzanordnung nach Anspruch 4, **dadurch gekennzeichnet, dass** das Steuerelement eine Vorrichtung zur Höhenverstellung, insbesondere zur elektrischen Höhenverstellung der Kopfstütze umfasst.

6. Sitzanordnung nach einem der vorangegangenen Ansprüche, **dadurch gekennzeichnet, dass** das Tragelement (24) zur Befestigung an der Sitzlehnentragstruktur (17, 18) von der Rückseite (34) der Sitzlehnentragstruktur her an diese ansetzbar, insbesondere an dieser befestigbar ist.

7. Sitzanordnung nach einem der vorangegangenen Ansprüche, **dadurch gekennzeichnet, dass** das Tragelement in seinem an der Sitzlehnentragstruktur befestigten Zustand einen Bereich der Rückwand der Rückenlehne bereitstellt.

8. Sitzanordnung nach einem der vorangegangenen Ansprüche, **dadurch gekennzeichnet, dass** die Sitzlehnentragstruktur als Lehnenrahmen (18) ausgebildet ist.

9. Sitzanordnung nach einem der vorangegangenen Ansprüche, **dadurch gekennzeichnet, dass** die beiden Holme (19a, 19b) um eine im wesentlichen quer zur Fahrtrichtung des Fahrzeuges verlaufende Achse (32) schwenkbar und in mehreren Gebrauchslagen schwenkarretierbar sind.

10. Sitzanordnung nach Anspruch 1, **dadurch gekennzeichnet, dass** das Kraftleitungsbauteil aus Metall besteht.

11. Sitzanordnung nach Anspruch 1, **dadurch gekennzeichnet, dass** das Kraftleitungsbauteil in hohem Maße verwindungssteif ausgebildet ist.

12. Sitzanordnung nach einem der Ansprüche 8 bis 11, **dadurch gekennzeichnet, dass** das Tragelement an dem Lehnenrahmen mittels Befestigungselementen (28) befestigbar ist, die mit lehnenrahmenseitigen, in unmittelbarer Nähe der Holme oder an den Holmen angeordneten Gegenbefestigungselementen (29) zusammenwirken.

13. Sitzanordnung nach einem der vorangegangenen Ansprüche, **dadurch gekennzeichnet, dass** das Tragelement (24) im wesentlichen plattenförmig ausgebildet ist.

14. Sitzanordnung nach einem der vorangegangenen Ansprüche, **dadurch gekennzeichnet, dass** das Tragelement Anschlusselemente für Versorgungsleitungen, z.B. Spannungsversorgungsleitungen, Signal- oder Datenleitungen, Pneumatik- oder Unterdruckleitungen, aufweist, die mit lehnenseitigen Gegenanschlusselementen in Verbindung, z.B. in Steckverbindung, gebracht werden können.

## Claims

1. Seat arrangement (10) for vehicles (11), in particular for a passenger car, comprising at least one front vehicle seat (12, 13), in particular an individual seat, and at least one rear vehicle seat (14), wherein the front vehicle seat for forming a backrest (16) comprises a seat-back support structure (17, 18) having two substantially vertically aligned bars, wherein a headrest (21) is fastened at least indirectly to the seat-back support structure, and wherein disposed on the rear (34) of the backrest (16) of the front vehicle seat, facing the rear vehicle seat, is a functional unit (27), such as a visual display unit, cup holder or the like, wherein a support element (24) that is separate from the seat-back support structure is provided, which is fastenable to the seat-back support structure, in particular to the rear (34) of the seat-back support structure (18), wherein a receiving element (23) for at least one support rod (22a, 22b) of the headrest is disposed on the support element, wherein the support element comprises a force transmission component in the form of a cross-bar, which introduces the forces arising in the event of a crash and exerted on the headrest into the bars, and wherein the support element (24) provides an installation compartment (26) for the functional unit.

2. Seat arrangement according to claim 1, **characterized in that** the support element (24) extends substantially over the entire width (BR) and/or substantially over the entire height (HR) of the rear (33) of the backrest (16).

3. Seat arrangement according to claim 1 or 2, **characterized in that** the headrest is mounted by means of the at least one support rod (22a, 22b) detachably in the receiving device (23).

4. Seat arrangement according to one of the preceding claims, **characterized in that** disposed on the support element (24) is a control element that interacts with the headrest.

5. Seat arrangement according to claim 4, **characterized in that** the control element comprises a device for height adjustment, in particular for electric height adjustment of the headrest.

6. Seat arrangement according to one of the preceding claims, **characterized in that** the support element (24) for fastening to the seat-back support structure (17, 18) may be placed, in particular fastened, from the rear (34) of the seat-back support structure onto the seat-back structure.

7. Seat arrangement according to one of the preceding claims, **characterized in that** the support element in its state of being fastened to the seat-back structure makes available a region of the rear wall of the backrest.

8. Seat arrangement according to one of the preceding claims, **characterized in that** the seat-back support structure takes the form of a seat-back frame (18).

9. Seat arrangement according to one of the preceding claims, **characterized in that** the two bars (19a, 19b) are pivotable about an axis (32) extending substantially transversely of the direction of travel of the vehicle and may be locked against pivoting in a plurality of operating positions.

10. Seat arrangement according to claim 1, **characterized in that** the force transmission component is made of metal.

11. Seat arrangement according to claim 1, **characterized in that** the force transmission component is designed so as to be to a large extent torsion-resistant.

12. Seat arrangement according to one of claims 8 to 11, **characterized in that** the support element is fastenable to the seat-back frame by means of fastening elements (28) that interact with counterpart fastening elements (29) disposed on the seat back in the immediate vicinity of the bars or on the bars.

13. Seat arrangement according to one of the preceding claims, **characterized in that** the support element (24) is of a substantially plate-shaped construction.

14. Seat arrangement according to one of the preceding claims, **characterized in that** the support element has connection elements for supply lines, for example power supply lines, signal- or data lines, pneumatic or vacuum lines, which may be brought into connection, for example into plug-in connection, with mating connection elements on the seat back.

## Revendications

1. Agencement de siège (10) pour des véhicules (11), en particulier pour une voiture personnelle, avec au moins un siège avant de véhicule (12, 13), en particulier un siège individuel, et au moins un siège arrière de véhicule (14), le siège avant de véhicule comprenant, pour former un dossier (16), une structure support de dossier (17, 18), munie de deux montants orientés sensiblement verticalement, un appui-tête (21) étant fixé, au moins indirectement, à la structure support de dossier, et une unité fonctionnelle (27), telle qu'un écran d'affichage, un porte-tasse, ou analogue, étant disposée, tournée vers le siège arrière de véhicule, sur la face arrière (34) du dossier (16) de siège avant de véhicule, un élément support (24), séparé de la structure support de dossier, susceptible d'être fixé sur la structure support de dossier, en particulier sur la face arrière (34) de la structure support de dossier (18), étant prévu, un dispositif de logement (23), pour au moins une barre support (22a, 22b) de l'appui-tête, étant disposé sur l'élément support, l'élément support présentant un composant de guidage de force, réalisé sous la forme de traverse, induisant dans les montants les efforts exercés sur l'appui-tête, survenant dans un cas de collision, et l'élément support (24) fournissant un champ d'insertion (26) pour l'unité fonctionnelle.

2. Agencement de siège selon la revendication 1, **caractérisé en ce que** l'élément support (24) s'étend sensiblement sur toute la largeur (BR) et/ou sensiblement sur toute la hauteur (HR) de la face arrière (33) du dossier (16).

3. Agencement de siège selon la revendication 1 ou 2, **caractérisé en ce que** l'appui-tête est maintenu, de façon désolidarisable, dans le dispositif de logement (23), à l'aide de la au moins une barre support (22a, 22b).

4. Agencement de siège selon l'une des revendications précédentes, **caractérisé en ce qu'**un élément de commande, coopérant avec l'appui-tête, est disposé sur l'élément support (24).

5. Agencement de siège selon la revendication 4, **caractérisé en ce que** l'élément de commande comprend un dispositif de réglage de hauteur, en particulier pour le réglage de hauteur électrique de l'appui-tête.

6. Agencement de siège selon l'une des revendications précédentes, **caractérisé en ce que**, pour assurer la fixation sur la structure support de dossier (17, 18), depuis la face arrière (34) de la structure support de dossier, l'élément support (24) est susceptible d'être appliquée sur celle-ci, en particulier d'être fixé à celle-ci.

7. Agencement de siège selon l'une des revendications précédentes, **caractérisé en ce que**, à son état fixé à la structure support de dossier, l'élément support fournit une zone de la paroi arrière du dossier.

8. Agencement de siège selon l'une des revendications précédentes, **caractérisé en ce que** la structure support de dossier est réalisée sous forme de cadre de dossier (18).

9. Agencement de siège selon l'une des revendications précédentes, **caractérisé en ce que** les deux montants (19a, 19b) sont susceptibles de pivoter autour d'un axe (32) s'étendant sensiblement transversalement à la direction de roulage du véhicule et sont susceptibles d'être bloqués en pivotement, en plusieurs positions d'utilisation.

10. Agencement de siège selon la revendication 1, **caractérisé en ce que** le composant d'induction de force est composé en métal.

11. Agencement de siège selon la revendication 1, **caractérisé en ce que** le composant d'induction de force est réalisé avec un haut degré de rigidité au gauchissement.

12. Agencement de siège selon l'une des revendications 8 à 11, **caractérisé en ce que** l'élément support est susceptible d'être fixé au cadre de dossier à l'aide d'élément de fixation (28), coopérant avec des éléments de fixation conjuguée (29) disposés côté cadre de dossier, à proximité directe des montants ou sur les montants.

13. Agencement de siège selon l'une des revendications précédentes, **caractérisé en ce que** l'élément support (24) est réalisé sensiblement en forme de plaque ou panneau.

14. Agencement de siège selon l'une des revendications précédentes, **caractérisé en ce que** l'élément support présente des éléments de raccordement pour des lignes ou conduites d'alimentation, par exemple des lignes d'alimentation en tension électrique, des lignes de signaux ou de données, des conduites pneumatiques ou à vide, pouvant être reliées, par exemple en une liaison à enfichage, à des éléments de raccordement conjugué situés côté dossier.
